# EUROPEAN PATENT APPLICATION

(11) **EP 2 139 224 A1**
(43) Date of publication of application: **30.12.2009**
(21) Application number: 08011333.5
(22) Date of filing: 23.06.2008
(51) Int. Cl.: H04N 5/225, H04N 5/262

(54) **Imaging system, sensor unit with an imaging system and vehicle mirror comprising an imaging system**

(71) Applicant: SMR Patents S.à.r.l., 1653 Luxembourg (LU)
(72) Inventor: Linsenmaier, Frank, 71384 Weinstadt (DE)
(74) Representative: Kaufmann, Ursula Josefine

(57) **Abstract**

The invention relates to an imaging system (10) comprising an imaging sensor (62) and an optical path (20, 30) for transmitting optical information collected in at least one field of view (102, 104, 106) to the imaging sensor (60). The at least two optical paths (20, 30) are coupled to a jointly useable optical lens (62) of an optical sensor unit (60) by deflecting at least once a main optical axis (22, 32) of at least one of the optical paths (20, 30).

## Description

### FIELD OF THE INVENTION

The invention pertains to an imaging system, a sensor unit with an imaging system and a vehicle mirror comprising an imaging system according to the preambles of the independent claims.

### BACKGROUND OF THE INVENTION

Modern vehicles are equipped with multiple sensors in order to support the driver and to increase the active and passive safety of the vehicle. For instance, headlamps can be controlled to generate either low beams or high beams. Low beams provide less illumination and are used to illuminate the forward path when other vehicles are present ahead of the ego vehicle. High beams provide more illumination and are used to illuminate the forward path when no other vehicles are present ahead of the ego vehicle.

Another operational area for sensors are driver assistant systems which survey the surroundings of the ego vehicle e.g. for detecting obstacles when a lane change is intended or when the ego vehicle is maneuvered into a parking position.

More and more optical functions have to be integrated into the vehicle, provided by a multitude of sensors or sensor systems which are distributed all over the vehicle. The different views of the various sensor systems allow for increasing the level of safety.

It is known in the art to employ imaging sensor chips like CCD arrays (CCD = charged coupled device) or CMOS arrays (CMOS = complementary metal oxide semiconductor). It is known to project an image onto a single imaging sensor chip and detect different images by using color filters.

A stereo imaging system employing a camera system with a mono camera is disclosed in DE 10 2004 056 668 A1. The camera system comprises a lens arrangement for deviating incident light beams and deviating mirrors for transferring the light beams onto the imager chip orthogonal to the incident direction. The lens arrangement comprises two telecentric lenses. The imager chip is positioned in a camera housing on a wall positioned perpendicular to the lens arrangement through which the light beams pass.

### SUMMARY OF THE INVENTION

It is an object of the invention to provide a compact and reliable imaging system, particularly for a vehicle. Another object is to provide a sensor unit with an imaging system. Still another object is to provide a vehicle mirror comprising an imaging system.

The objects are achieved by the features of the independent claims. The other claims and the description disclose advantageous embodiments of the invention.

According to a first aspect of the invention, an imaging system is proposed which comprises an imaging sensor and an optical path for transmitting optical information collected in at least one field of view to the imaging sensor: At least two optical paths are coupled to a jointly useable optical lens of an optical sensor unit by deflecting at least once a main optical axis of at least one of the optical paths. Optical information of at least two different fields of view can be coupled to a single optical lens of the optical sensor unit. It is not necessary to use one lens per optical path. The construction of the imaging system is less complex and less vulnerable to optical distortions.To distinguish the several information of different views the lines of the sensors are separated in one embodiment by a small mask structure. This mask helps to mark the border between the images and to avoid mixture of the images. In another embodiment the images are defined by software only. This can be achieved by defining relations between the images and the lines of the sensor chip, so that e.g. the lines 1 to 200 of the sensor area are related to a first view and the lines 201 to 400 to a second view and so on. The mask function is achieved by defining that e.g. line 198 to line 202 is not used to analyse the image.

Advantageously, it is possible to display different aperture angles by projecting two or more optical paths through one single lens onto an imaging chip. By using only one lens a calibration of the sensitivity of different imaging chips can be avoided compared to imaging systems known in the art which use two imaging chips with tow lens systems for producing e.g. a stereo view.

Preferably, a main optical axis of at least one of the optical paths can be deflected by at least 45°, preferably by at least 90". It is favorably facilitated to combine strongly deviating fields of view on one single imaging sensor.

According to a preferred embodiment of the invention, at least one reflecting mirror can be arranged in at least one of the at least two optical paths. By using a reflecting mirror it is possible to reduce optics' distortions which go normally with an optical lens. The larger an aperture angle is the larger is an optical distortion, particularly in the outer areas of a lens.

In a favorable development, at least one reflecting mirror is arranged in each of the optical paths. It is favorably facilitated to combine strongly different fields of view. on one single imaging sensor. By combining an optical path, which maintains its orientation of its optical axis, and another optical path comprising a mirror which deflects the main optical axis by e.g. 90°, it is possible to combine a blind-spot detection system and/ or a lane change system with a system surveying the ambient of a vehicle. By using a mirror, a high image resolution can be obtained as an influence of optical distortions caused by optical lenses can be reduced. The mirror deflects of the optical axis of an optical path and thus allows access to fields of view in virtually all directions by simply orienting the mirror in an appropriate position, e.g. for a camera system.

The at least reflecting mirror can be a plane mirror, a concavely shaped mirror or a convexly shaped mirror. By using a curved mirror, different aperture angles can be provided in the optical paths.

At least two mirrors can be arranged in at least one of the optical paths. It is favorably facilitated to combine different fields of view on one single imaging sensor.

Favorably, each mirror can deflect main optical axis of the respective optical path by at least 45°, preferably by at least 90°.

According to a preferred embodiment, at least two mirrors can be arranged in at least one of the optical paths. Preferable, the mirrors can be plane mirrors. However, one or more mirrors can also be curved mirrors with a convex or concave shape.

Favorably, the at least two optical paths can be arranged to provide a stereo view. This can be achieved particularly e.g. by using two plane mirrors in each of two optical paths, wherein each mirror defects the main optical axis of the respective optical path by at least 90° and wherein the fields of vision for both optical paths can be oriented in the same direction. The respective fields of view are displaced from each other, e.g. crosswise to a forward direction, thus yielding a stereo image.

Alternatively, the at least two optical paths can be arranged to provide a corner view. This can be provided e.g. by one mirror in each of two optical paths which deviates the respective main optical axis by at least 90°, wherein the fields of view can be oriented opposite to each other

In a further advantageous embodiment, the at least two optical paths can be arranged to provide a view with different aperture angles. This can be done by employing one or more plane mirrors in one of the at least one optical paths and a curved mirror, either a convexly or a concavely shaped mirror, in another of the at least one optical paths.

According to another aspect of the invention, a sensor unit, particularly a vehicular sensor unit, can comprise at least one of the described imaging systems. The sensor unit can favorably be attached to the vehicle in an interior and/or exterior rear view mirror, in a turn indicator, or on other convenient locations in or on the vehicle.

According to another aspect of the invention, a vehicle mirror can comprise at least one of the described imaging systems. The vehicle mirror can be an interior or an exterior rear view mirror.

Favorably, the invention allows for combining the relatively simple optical system with an intelligent system, which uses the collected image information to provide basic information to the driver, such as e.g. an acoustic, a haptic and/or an optical signal instead of a complex image. Thus, the driver receives only important information without being overloaded with unnecessary information and/or without a time consuming necessity to detect important information among a variety of presented information.

### BRIEF DESCRIPTION OF THE DRAWINGS

The present invention together with the above-mentioned and other objects and advantages may best be understood from the following detailed description of the embodiments, but not restricted to the embodiments, wherein is shown schematically:
- Fig. 1: a schematic representation of optical paths according to a first embodiment of a preferred imaging system providing an undeflected and a deflected optical path;
- Fig. 2: a schematic representation of optical paths according to a second embodiment of a preferred imaging system, providing a corner view;
- Fig. 3: a schematic representation of optical paths according to a third embodiment of a preferred imaging system, providing a stereo view;
- Fig. 4: a schematic representation of optical paths according to a fourth embodiment of a preferred imaging system, providing different aperture angles;
- Fig. 5: an embodiment in which the angle of incoming light is less than 45°; and
- Fig. 6: a representation of various fields of view of a preferred exterior rear view mirror.

### DETAILED DESCRIPTION OF EXAMPLE EMBODIMENTS

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

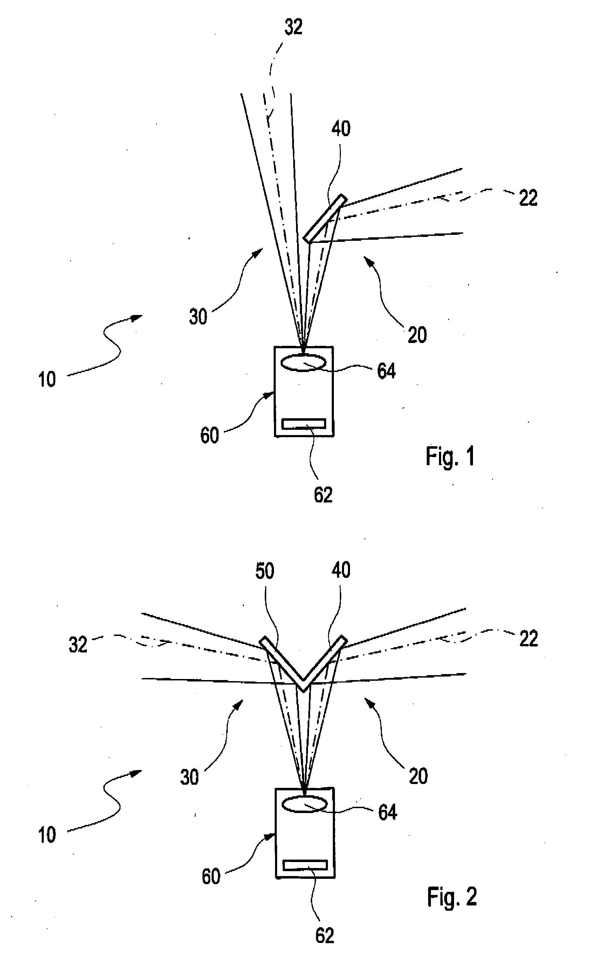

Fig. 1 depicts schematically a first preferred embodiment of a preferred imaging system 10 according to the invention.

An optical sensor unit 60 comprises an imaging sensor 62 and an optical lens 64. Image information is transmitted to the optical sensor by two optical paths 20, 30 referring to the image information characteristic for a field of view (not shown) of the respective optical path 20, 30. Each of the optical paths 20, 30 has a main optical axis 22, 32.

The optical axis 32 of the optical path 30 is undeflected and oriented in a first direction. In a preferred vehicular sensor employing such an imaging system 10 this direction could be a direction characteristic to a blind spot detection and/or a lane change assist.

The optical axis 22 of the optical path 20 is deflected by a mirror 40 by an angle of e.g. 90°, thus incoming light from a second direction, virtually perpendicular to the first direction, is reflected by the mirror 40 towards the optical sensor unit 60. In a preferred vehicular sensor employing such an imaging system 10 the deflected optical path 22 could correspond to a direction which is e.g. characteristic for a sensor surveying an ambient of the vehicle.

The optical path 30 and the optical path 20 are focused onto the lens 64 which is jointly used by light in both optical paths 20, 30. Both image information are combined and detected by the imaging chip 62 and analyzed by an appropriate unit (not shown).

Fig. 2 depicts schematically a second preferred embodiment of a preferred imaging system 10 according to the invention.

An optical sensor unit 60 comprises an imaging sensor 62 and an optical lens 64. Image information is transmitted to the optical sensor by two optical paths 20, 30 referring to the image information characteristic for a field of view (not shown) of the respective optical path 20, 30. Each of the optical paths 20, 30 has a main optical axis 22, 32.

The optical axis 22 of the optical path 20 is deflected by a mirror 40 by an angle of e.g. 90", thus incoming light of a first direction is reflected by the mirror 40 towards the optical sensor unit 60. The optical axis 32 of the optical path 30 is deflected by a mirror 50 by an angle of e.g. 90°, thus incoming light from a second direction is reflected by the mirror 50 towards the optical sensor unit 60.

The optical path 30 and the optical path 20 are focused onto the lens 64 which is jointly used by light in both optical paths 20, 30. Both image information are combined and detected by the imaging chip 62 and analyzed by an appropriate unit (not shown).

In a preferred vehicular sensor employing such an imaging system 10 these first and second directions could be characteristic to a so called corner view. Image information of fields of view which are oriented opposite to each other can be analyzed.

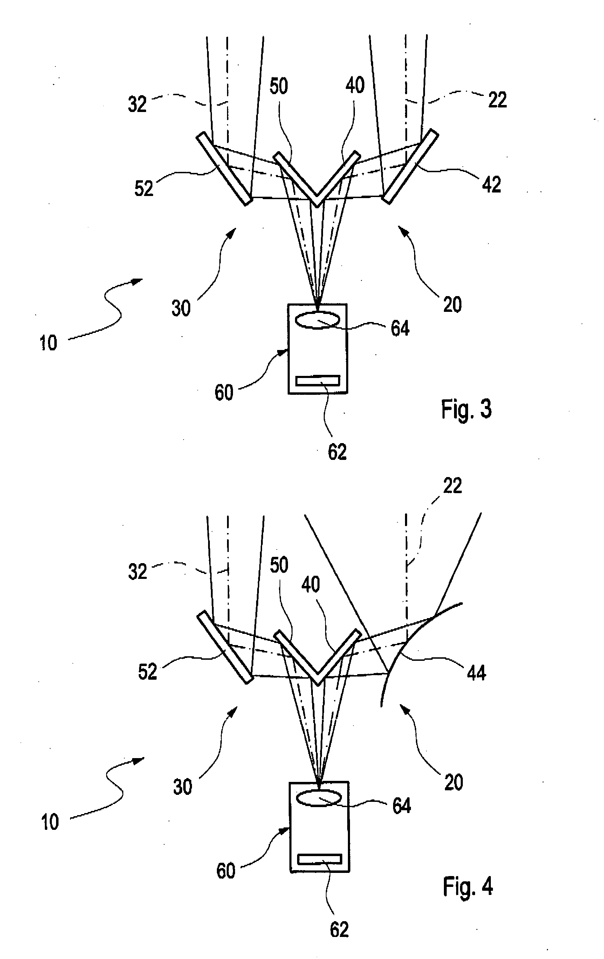

Fig. 3 depicts schematically a third preferred embodiment of a preferred imaging system 10 according to the invention.

An optical sensor unit 60 comprises an imaging sensor 62 and an optical lens 64. Image information is transmitted to the optical sensor by two optical paths 20, 30 referring to the image information characteristic for a field of view (not shown) of the respective optical path 20, 30. Each of the optical paths 20, 30 has a main optical axis 22, 32. The optical paths 20, 30 are in this embodiment virtually parallel to each other, thus image information considering the field of view, e.g. of an object in this field of view can be detected by the image sensor unit 60. The optical axis 22 of the optical path 20 is deflected by a mirror 42 by an angle of e.g. 90°. Incoming light of a first direction is reflected by the mirror 42 towards a second mirror 40 where it is reflected e.g. by an angle of e.g. 90° and focused towards the optical sensor unit 60. The optical axis 22 of the optical path 20 is laterally shifted by-the double reflection.

The optical axis 32 of the optical path 30 is deflected by a mirror 52 by an angle of e.g. 90°. Incoming light of a second direction parallel to the first direction is reflected by the mirror 52 towards a second mirror 50 where it is reflected e.g. by an angle of e.g. 90° and focused towards the optical sensor unit 60. The optical axis 32 of the optical path 30 is laterally shifted by the double reflection.

The optical path 30 and the optical path 20 are focused onto the lens 64 which is jointly used by light in both optical paths 20, 30. Both image information are combined and detected by the imaging chip 62 and analyzed by an appropriate unit (not shown). In a preferred vehicular sensor employing such an imaging system 10 this corresponds to a stereo view.

The optical paths in further embodiments can overlap each others or can be shifted versus each others.

Fig. 4 depicts schematically a forth preferred embodiment of a preferred imaging system 10 according to the invention.

An optical sensor unit 60 comprises an imaging sensor 62 and an optical lens 64. Image information is transmitted to the optical sensor by two optical paths 20, 30 referring to the image information characteristic for a field of view (not shown) of the respective optical path 20, 30. Each of the optical paths 20, 30 has a main optical axis 22, 32. The optical paths 20, 30 are virtually parallel to each other, thus image information considering the field of view, e.g. of an object in this field of view can be detected by the image sensor unit 60.

The optical axis 22 of the optical path 20 is deflected by a curved mirror 44 by an angle of e.g. 90°. The curved mirror 44 is convexly shaped. Incoming light of a first direction is reflected by the mirror 44 towards a second mirror 40 where it is reflected e.g. by an angle of e.g. 90° and focused towards the optical sensor unit 60. The optical axis 22 of the optical path 20 is laterally shifted by the double reflection.

The optical axis 32 of the optical path 30 is deflected by a mirror 52 by an angle of e.g. 90°. Incoming light of a second direction parallel to the first direction is reflected by the mirror 52 towards a second mirror 50 where it is reflected e.g. by an angle of e.g. 90° and focused towards the optical sensor unit 60. The optical axis 32 of the optical path 30 is laterally shifted by the double reflection.

The aperture angle captured by the curved mirror 44 is larger than the aperture angle captured by the plane mirror 52. If the curved mirror 44 would be concavely shaped, the captured aperture angle would be smaller than that captured by the plane mirror 52.

The optical path 30 and the optical path 20 are focused onto the lens 64 which is jointly used by light in both optical paths 20, 30. Both image information are combined and detected by the imaging chip 62 and analyzed by an appropriate unit (not shown).

In a preferred vehicular sensor employing such an imaging system 10 this corresponds to a stereo view. By providing a larger aperture angle the convexly shaped mirror 44 allows for displaying a survey of the respective field of view whereas the second optical path 30 could provide a more localized information of fields of view oriented in the same direction. Thus it is possible to display a close-up range view and a far field view on the same imaging chip 62.

It is possible to use different reflective surfaces as the mirror 40, 50 52, 44 allows to compensate distortions in the optical path. The optics components of the device are adapted to optimize the view and the projection onto the sensor chip. The mechanical adaptation of the optical paths is done in accordance to the required features. The complete imaging system allows then to adapt the views on a first level be defining the optical paths and to compensate distortion with optical devices and in a second level to compensate distortion by software analysis of the images.

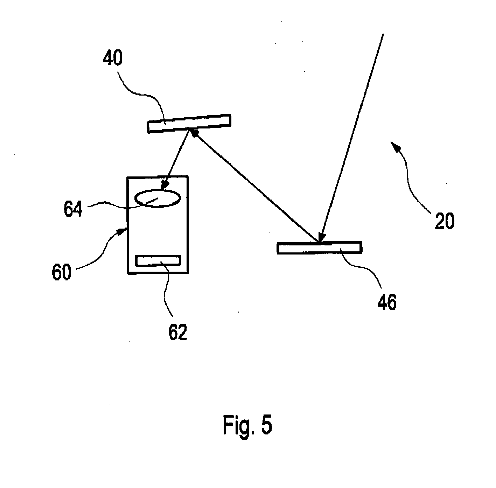

Fig. 5 shows an example in which the angles between the deflected portions of the optical path 20 are not 90 and 45°. To reduce the space that is necessary to implement the stereo view in The vehicle it is possible to arrange a mirror 40 closely to the sensor 60 in the same level. Therefore the angles can be different for this embodiment.

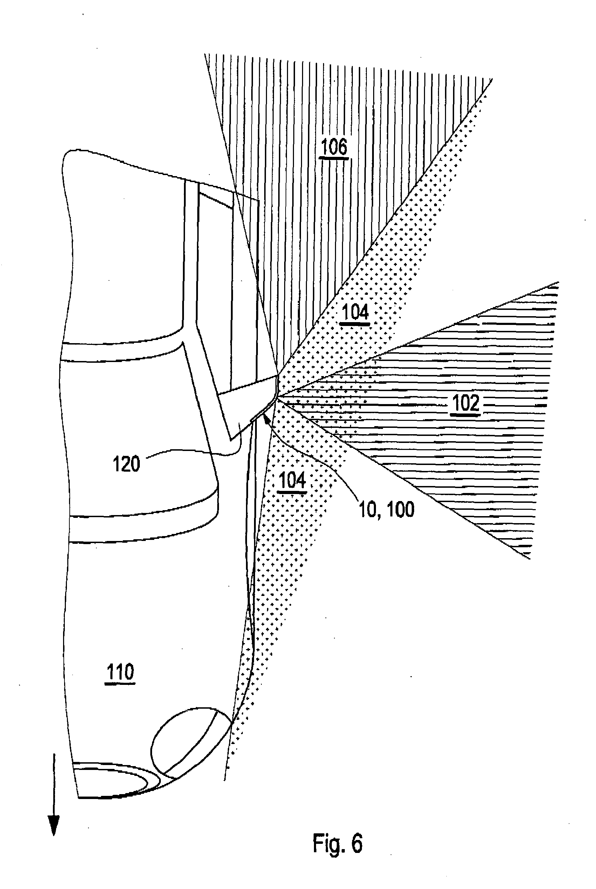

Fig. 6 illustrates an example of a vehicle 110 comprising a preferred exterior rear view mirror 120 which is equipped with a preferred imaging system 10 employing any one or more of the above-descnbed embodiments. The imaging system 10 is integrated in a preferred sensor unit 100 arranged in the rear view mirror 120. For instance, the field of view 102 corresponds to a lane change assist sensor, the field of view 104 corresponds to a crash sensor and the field of view 106 corresponds to a blind spot detection sensor. Favorably, the imaging sensor 10 allows for displaying image information of these fields of view 102, 104, 106 on a single imaging chip 62, particularly by employing a common lens 64 coupled to the imaging chip 62.

## Claims

1. An imaging system (10) comprising an imaging sensor (62) and at least one optical path (20, 30) for transmitting optical information collected in at least one field of view (102, 104, 106) to the imaging sensor (60), **characterized in that** at least two optical paths (20, 30) are coupled to a jointly useable optical lens (62) of an optical sensor unit (60) by deflecting at least once a main optical axis (22, 32) of at least one of the optical paths (20, 30).

2. The system according to claim 1, **characterized in that** the main optical axis (22, 32) of the at least one optical path (20, 30) is deflected by at least 45°, preferably by at least 90°.

3. The system according to claim 1 or 2, **characterized in that** at least one reflecting mirror (40, 42, 44, 46, 50, 52) is arranged in at least one of the at least two optical paths (20, 30).

4. The system according to one of the preceding claims, **characterized in that** at least one reflecting mirror (40, 42, 44, 46, 50, 52) is arranged in each of the optical paths (20, 30).

5. The system according to one of the preceding claims, **characterized in that** the at least reflecting mirror (40, 42, 46, 50, 52) is a plane mirror.

6. The system according to one of the preceding claims, **characterized in that** the at least one reflecting mirror (44) is a concavely shaped mirror.

7. The system according to one of the preceding claims, **characterized in that** the at least one mirror is a convexly shaped mirror

8. The system according to one of the preceding claims, **characterized in that** at least two mirrors (40, 42, 44, 46, 50, 52) are arranged in at least one of the optical paths (20, 30).

9. The system according to claim 8, **characterized in that** each mirror (40, 42, 44, 50, 52) deflects a main optical axis (22, 32) of the respective optical path (20, 30) by at least 45°, preferably by at least 90°

10. The system according to one of the preceding claims, **characterized in that** at least two mirrors (40, 42, 46, 50, 52) are arranged in at least one of the optical paths (20, 30)..

11. The system according to one of the preceding claims, **characterized in that** the at least two optical paths (20, 30) are arranged to provide a stereo view.

12. The system according to one of the preceding claims, **characterized in that** the at least two optical paths (20, 30) are arranged to provide a corner view.

13. The system according to one of the preceding claims, **characterized in that** the at least two optical paths (20, 30) are arranged to provide a view with different aperture angles.

14. The system according to one of the preceding claims, **characterized in that** optical distortions are compensated by at least one reflecting mirror (40, 42, 44, 46, 50, 52) in at least one of the at least two optical paths (20, 30).

15. A sensor unit (100), particularly a vehicular sensor unit, comprising at least one of the imaging system (10) according to one of the preceding claims.

16. A vehicle mirror (120) comprising at least one of the imaging system (10) according to one of the claims 1 to 14.

## Amended claims

### Amended claims in accordance with Rule 137(2) EPC.

**1.** An imaging system (10) comprising an imaging sensor (62) and at least one optical path (20, 30) for transmitting optical information collected in at least one field of view (102, 104, 106) to the imaging sensor (62), wherein at least two optical paths (20, 30) are coupled to a jointly useable optical lens (64) of an optical sensor unit (60) by deflecting at least once a main optical axis (22, 32) of at least one of the optical paths (20, 30) **characterized in that** optical information of at least two different fields of view (102, 104, 106) are coupled to the jointly useable optical lens (62) of the optical sensor unit (60) by using at least one reflecting mirror (40, 42, 44, 46, 50, 52) arranged in at least one of the at least two optical paths (20, 30) and focusing the light of the at least two optical paths (20, 30) towards the jointly usable lens (64).

**2.** The system according to claim 1, **characterized in that** the main optical axis (22, 32) of the at least one optical path (20, 30) is deflected by at least 45°, preferably by at least 90°.

**3.** The system according to one of the preceding claims, **characterized in that** at least one reflecting mirror (40, 42, 44, 46, 50, 52) is arranged in each of the optical paths (20, 30).

**4.** The system according to one of the preceding claims, **characterized in that** the at least reflecting mirror (40, 42, 46, 50, 52) is a plane mirror.

**5.** The system according to one of the preceding claims, **characterized in that** the at least one reflecting mirror (44) is a concavely shaped mirror.

**6.** The system according to one of the preceding claims, **characterized in that** the at least one mirror is a convexly shaped mirror

**7.** The system according to one of the preceding claims, **characterized in that** at least two mirrors (40, 42, 44, 46, 50, 52) are arranged in at least one of the optical paths (20, 30).

**8.** The system according to claim 7, **characterized in that** each mirror (40, 42, 44, 50, 52) deflects a main optical axis (22, 32) of the respective optical path (20, 30) by at least 45°, preferably by at least 90°

**9.** The system according to one of the preceding claims, **characterized in that** at least two mirrors (40, 42, 46, 50, 52) are arranged in at least one of the optical paths (20, 30).

**10.** The system according to one of the preceding claims, **characterized in that** the at least two optical paths (20, 30) are arranged to provide a stereo view.

**11.** The system according to one of the preceding claims, **characterized in that** the at least two optical paths (20, 30) are arranged to provide a corner view.

**12.** The system according to one of the preceding claims, **characterized in that** the at least two optical paths (20, 30) are arranged to provide a view with different aperture angles.

**13.** The system according to one of the preceding claims, **characterized in that** optical distortions are compensated by at least one reflecting mirror (40, 42, 44, 46, 50, 52) in at least one of the at least two optical paths (20, 30).

**14.** A sensor unit (100), particularly a vehicular sensor unit, comprising at least one of the imaging system (10) according to claim 1.

**15.** A vehicle mirror (120) comprising at least one of the imaging system (10) according to claim 1.
